# EUROPEAN PATENT SPECIFICATION

(11) **EP 3 351 381 B1**
(45) Date of publication and mention of the grant of the patent: **18.11.2020**
(21) Application number: 16846395.8
(22) Date of filing: 09.09.2016
(51) Int. Cl.: B32B 27/38, B05D 5/00, B05D 7/24, B32B 17/10, C03C 17/32, C03C 17/34, B32B 17/06

(54) **ANTIFOGGING ARTICLE AND AUTOMOBILE GLASS**
BESCHLAGRESISTENTER ARTIKEL UND FAHRZEUGGLAS
ARTICLE ANTI-BUÉE ET VERRE AUTOMOBILE

(30) Priority: 14.09.2015 JP 2015180674
(43) Date of publication of application: 25.07.2018
(73) Proprietor: AGC Inc., Tokyo 100-8405 (JP)
(72) Inventor: KODAIRA, Hirokazu, Tokyo 100-8405 (JP); SUGIHARA, Yosuke, Tokyo 100-8405 (JP); MORI, Yusuke, Tokyo 100-8405 (JP)
(74) Representative: Müller-Boré & Partner Patentanwälte PartG mbB
(86) International application number: PCT/JP2016/076663
(87) International publication number: WO 2017/047524

(56) References cited:
- EP-A1- 0 051 405
- EP-A1- 0 119 331
- EP-A1- 3 132 929
- WO-A1-2005/093465
- WO-A1-2014/119736
- WO-A1-2015/152047
- WO-A1-2015/152050
- JP-A- H04 180 988
- JP-A- 2000 198 961
- JP-A- 2001 038 858
- JP-A- 2001 072 928
- JP-A- 2001 089 194

## Description

The present invention relates to an antifogging article and to an automobile glass.

When a transparent base such as glass or plastic has a surface temperature equal to or lower than a dew point, minute droplets adhere to its surface to scatter transmitted light, and the transparent base is impaired in its transparency to have a so-called "fogging" state. As a means for preventing the fogging, various proposals have been made so far.

A known method for preventing the fogging of the base surface is, for example, to provide a layer of a hygroscopic compound on the base surface to lower an atmospheric humidity of the base surface. In relation to this, there is known an art to form a water-absorbing crosslinkable resin on the base surface through a reaction of a polyepoxide compound and a curing agent.

It is said that, when absorbing water, a water-absorbing resin expands to have a stress difference from the base and thus easily peels off the base. The water-absorbing resin having a larger thickness has a higher water absorbing property, but on the other hand, suffers a larger stress generated between itself and the base when it expands. This means that an antifogging property (water absorbing property) and peel resistance are usually in a trade-off relation, and only satisfying one of these cannot be said as practical.

Accordingly, there is a demand for a water-absorbing resin that achieves peel resistance and abrasion resistance as well as a high antifogging property to satisfy practical film properties, and its development is progressing. However, an attempt to satisfy the peel resistance and abrasion resistance as well as the high antifogging property in a hygroscopic resin layer may result in discoloring of the hygroscopic resin layer to yellow while in use, and may deteriorate transparency of the base or worsen its appearance. On the other hand, blending a curing agent, a curing catalyst, or the like in order to inhibit the yellowing involves a problem of the deterioration of the film properties. For practical use, one high both in the antifogging property and abrasion resistance is required, but an antifogging article not only satisfying these properties but also having a good appearance is required.

Patent Reference 1: JP-A 2015-30803

Further, EP 0 051 405 A1 describes an anti-fogging film derived from the curing of polyvinyl alcohol, finely divided silica and an organic silicon compound and a hydrolysate thereof which is capable of forming silanol by hydrolysis and having such a carbon/silicon element ratio that said ratio of the surface layer of the film is larger than that of the entire film.

The problem to be solved by the present invention is to provide an antifogging article and an automobile glass that not only satisfy a good antifogging property and peel resistance but also have a good appearance.

The antifogging article according to the present invention includes: a transparent base; an antifogging layer made of an epoxy resin cured material provided on the transparent base, the epoxy resin cured material containing a silicon atom and an aluminum atom; and a foundation layer between the transparent base and the antifogging layer, the foundation layer being made of an epoxy resin cured material having a structure in which a silicon atom and three electron-withdrawing groups are bonded,
wherein the antifogging agent composition from which the antifogging layer is formed by curing contains at least one kind of water-soluble epoxy resin, at least one kind of aluminum compound having at least one of an aluminum alkoxide structure and an aluminum chelate structure, and at least one kind of alkoxysilane compound, the antifogging layer being a layer whose main skeletal structure is a water-soluble epoxy resin,
wherein the water-soluble epoxy resin is a combination of a first resin with a 90% water-soluble rate or more and a second resin with a 50% water-soluble rate or less, the water-soluble rate referring to a dissolution rate when a 10 part by mass resin is mixed to 90 part by mass water at 25°C,
wherein the content of the resin component in the antifogging agent composition is from 50 to 95% by mass in terms of the solid content, and the content of the aluminum compound is from 0.1 to 20 parts by mass and the content of the alkoxysilane compound is from 5 to 40 parts by mass, relative to 100 parts by mass of the epoxy resin component, respectively, and
wherein the antifogging layer has physical properties of:
an antifogging time (T₃₅) of eighty seconds or more in a 35°C steam test, wherein the 35°C steam test is performed by measuring the antifogging time (T35) from an installation of the transparent base with the antifogging layer on one main surface of the transparent base in a hermetic state while a square region in an area with 70 mm x 70 mm of a surface of the antifogging layer at a distance of 85 mm from a hot water surface of a 35°C hot water bath, until when haze or distortion on the square region by a water film is visually recognized, after the transparent base with the antifogging layer is left under an environment at 23°C and 50% RH for one hour;
a variation ΔH of 4.0% or less in haze after a Taber abrasion test stipulated in Japan Industrial Standard (JIS) R3212; and
a variation ΔYI of 3 or less in a yellowness index stipulated in JIS K7373 after the antifogging layer is kept at 100°C for 500 hours.

The automobile glass according to the present invention includes: a curved laminated glass; a foundation layer provided on a concave surface of the curved laminated glass, the foundation layer being made of an epoxy resin cured material having a structure in which a silicon atom and three electron-withdrawing groups are bonded; and an antifogging layer made of an epoxy resin cured material provided on the foundation layer, the epoxy resin cured material containing a silicon atom and an aluminum atom,
wherein the antifogging agent composition from which the antifogging layer is formed by curing contains at least one kind of water-soluble epoxy resin, at least one kind of aluminum compound having at least one of an aluminum alkoxide structure and an aluminum chelate structure, and at least one kind of alkoxysilane compound, the antifogging layer being a layer whose main skeletal structure is a water-soluble epoxy resin,
wherein the water-soluble epoxy resin is a combination of a first resin with a 90% water-soluble rate or more and a second resin with a 50% water-soluble rate or less, the water-soluble rate referring to a dissolution rate when a 10 part by mass resin is mixed to 90 part by mass water at 25°C,
wherein the content of the resin component in the antifogging agent composition is from 50 to 95% by mass in terms of the solid content, and the content of the aluminum compound is from 0.1 to 20 parts by mass and the content of the alkoxysilane compound is from 5 to 40 parts by mass, relative to 100 parts by mass of the epoxy resin component, respectively, and
wherein the antifogging layer has physical properties of:
an antifogging time (T₃₅) of eighty seconds or more in a 35°C steam test, wherein the 35°C steam test is performed by measuring the antifogging time (T35) from an installation of the transparent base with the antifogging layer on one main surface of the transparent base in a hermetic state while a square region in an area with 70 mm x 70 mm of a surface of the antifogging layer at a distance of 85 mm from a hot water surface of a 35°C hot water bath, until when haze or distortion on the square region by a water film is visually recognized, after the transparent base with the antifogging layer is left under an environment at 23°C and 50% RH for one hour;
a variation ΔH of 4.0% or less in haze after a Taber abrasion test stipulated in Japan Industrial Standard (JIS) R3212;
a variation ΔYI of 3 or less in a yellowness index stipulated in JIS K7373 after the antifogging layer is kept at 100°C for 500 hours; and
a yellowness index YI₂ of 3 or less stipulated in JIS K7373 after the antifogging layer is kept at 100°C for 500 hours.

According to the present invention, it is possible to provide an antifogging article not only satisfying a good antifogging property and peel resistance but also having a good appearance.

### BRIEF DESCRIPTION OF THE DRAWINGS

Fig. 1 is a sectional view schematically illustrating an antifogging article.
Fig. 2 is a sectional view schematically illustrating an antifogging article according to one embodiment of the present invention.
Fig. 3 is a sectional view schematically illustrating an automobile glass according to one embodiment of the present invention.

### (Antifogging Article)

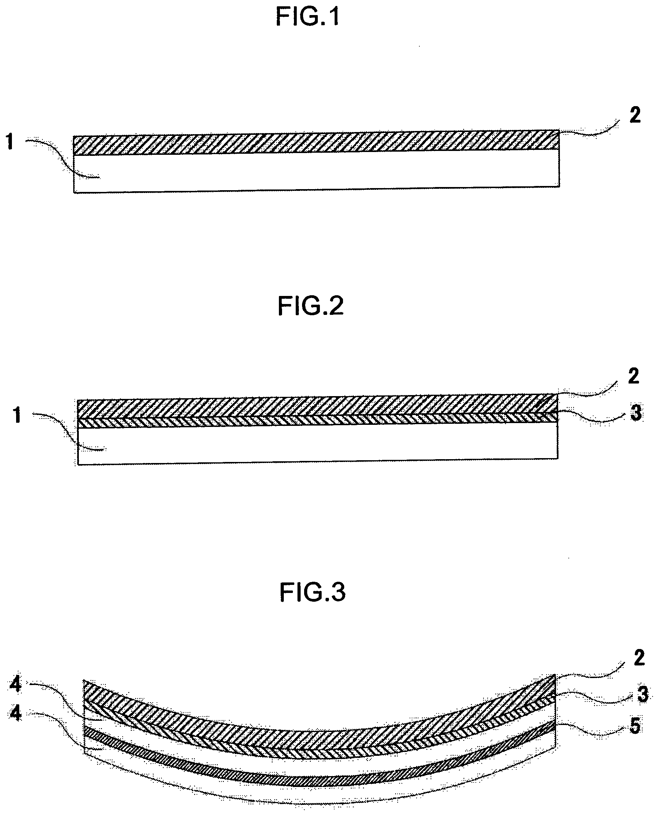

In the antifogging article, an antifogging layer 2 is on a transparent base 1 as illustrated in Fig. 1. As the kind of the transparent base 1, various kinds of glass such as soda-lime glass, aluminosilicate glass, and quartz glass, and resins such as polyethylene terephthalate and polycarbonate are usable. In a case where the transparent base 1 is a glass substrate, it may be physically tempered or chemically tempered. The use of the tempered glass substrate can reduce the weight of the transparent base 1 and thus is preferable. In a case where the transparent base 1 is the glass substrate, it need not be a single plate glass substrate, and may be laminated glass or double glass. In this case, the antifogging layer 2 is provided on the outermost surface of the laminated glass or the double glass.

The transparent base 1 is not limited to a specific shape, and may be in a flat plate shape or may have a curved surface, but since a glass substrate is higher in rigidity and is more difficult to peel when given a stress than a resin substrate, a glass substrate having a curved surface where the stress easily concentrates is most suitably usable. An example of the glass substrate having the curved surface, that is, the curved glass substrate is automobile glass. Further, in a case where the transparent base 1 is a single plate glass substrate, its thickness is, for example, 0.3 to 5 mm. In a case where the transparent substrate 1 is curved laminated glass, the antifogging layer 2 is preferably provided on the concave surface.

The antifogging layer 2 is made of a polymer, and its composing material is an epoxy resin cured material having silicon atoms and aluminum atoms. The antifogging layer 2 which is made of the epoxy resin cured material having the silicon atoms and the aluminum atoms can be adjusted to a layer excellent in a water absorbing property and abrasion resistance and also excellent in appearance. As an index of the water absorbing property, the antifogging time (T₃₅) in a 35°C steam test is used. The antifogging layer 2 is a film whose antifogging time (T₃₅) in a 35°C steam test is eighty seconds or more.

The antifogging time (T₃₅) in the 35°C steam test is measured according to the following procedure. After a transparent base in which an antifogging layer is provided on one main surface of a soda-lime glass substrate is left under a 23°C and 50% RH environment for one hour, the transparent base having the antifogging layer is installed in a hermetic state, with a 70 mm x 70 mm rectangular region in a surface of the antifogging layer being above a 35°C hot water bath by an 85 mm distance from a hot water surface, and the time from the start of the installation up to an instant when haze or distortion by a water film is visually recognized is defined as the antifogging time (T₃₅) [second]. In this specification, "distortion by a water film is recognized" means that the maximum value of optical distortion in the optical distortion test conforming to JIS R3212 exceeds 2 (minutes).

The antifogging layer 2 is a film whose variation ΔH in haze after the Taber abrasion test stipulated in Japan Industrial Standard (JIS) R3212 is 4.0% or less. Here, ΔH (%) can be calculated by haze (Ha) after the test - haze (Hb) before the test. The Taber abrasion test conforms to JIS R3212 (vehicle interior side) (2008) and is an abrasion resistance test in which an abrasive wheel CS-10F is used and the abrasive wheel is brought into contact with the surface of the antifogging layer 2 and is rotated 100 times under a 4.90 N load by a 5130 abrasion tester manufactured by Taber Industries.

In the antifogging layer 2, a variation ΔYI in a yellowness index stipulated in JIS K7373 (2006) after a 100°C and 500-hour heat resistance acceleration test is 3 or less. The yellowness index is especially preferably 1.5 or less, and a film with a reduced yellowness index can be excellent in appearance.

The yellowness index was calculated according to the standard of JIS Z8722 (2009), using a spectrophotometer (manufactured by Hitachi, Ltd.: U-4100). A calculation method is: [a yellowness index (YI₁) of a transparent base with an antifogging film before the 100°C and 500-hour heat resistance acceleration test (initial period)] - [a yellowness index (YI₂) of the transparent base with the antifogging film after the 100°C and 500-hour heat resistance acceleration test (after the heat resisting)], and the calculated value is defined as the variation ΔYI in the yellowness index of the antifogging article.

In the antifogging article, the variation ΔYI in the yellowness index stipulated in JIS K7373 is 3 or less. The value of YI after the heat resistance acceleration test (YI₂) is not necessarily limited, but in a case where the antifogging article is a vehicle laminated glass, this value is 3 or less from a viewpoint of visibility.

The antifogging layer 2 preferably has an area ratio of 75% or more to the area of the main surface of the transparent base 1.

The thickness of the antifogging layer 2 is preferably 5 to 50 µm, and especially preferably 10 to 30 µm. The antifogging layer 2 whose thickness is less than 5 µm may have a difficulty in exhibiting a desired antifogging property. On the other hand, the antifogging layer 2 whose thickness is over 50 µm may easily peel off the transparent base 1 or a later-described foundation layer 3. Note that the aforesaid preferable film thickness of the antifogging layer 2 is not necessarily satisfied over the entire surface of the antifogging layer 2, and only needs to be satisfied in 50% or more in the area of the surface where the antifogging layer 2 is provided.

Further, the composing material of the antifogging layer 2 is preferably an epoxy resin cured material further having an aromatic ring. The antifogging layer 2 whose composing material further has the aromatic ring can be adjusted to a layer excellent in moisture resistance in addition to a water absorbing property, abrasion resistance, and appearance. In the evaluation of the moisture resistance, the antifogging layer undergoing no peeling after being held in a 50°C and 95% relative humidity thermohygrostat for 2000 hours is evaluated as having moisture resistance. In this specification, "undergo peeling" refers to a case where, after the aforesaid 2000-hour holding in the 50°C and 95% relative humidity thermohygrostat, even part of the surface of the foundation layer or the transparent base on which the antifogging layer is formed is exposed.

Further, the antifogging layer 2 preferably undergoes no peeling after the boil test (100°C, two hours) stipulated in JIS R3212.

The antifogging layer 2 is a layer whose main skeletal structure is a water-soluble epoxy resin. The antifogging layer 2 having the epoxy main skeletal structure can be adjusted to a layer more excellent in water absorbing property and abrasion resistance.

Further, the antifogging layer 2 may contain a filler. The antifogging layer 2 containing the filler can have increased mechanical strength and heat resistance. Examples of the filler include an inorganic filler and an organic filler, and an inorganic filler is preferable. Examples of the inorganic filler include silica, alumina, titania, zirconia, ITO (indium tin oxide), out of which silica or ITO is preferable. Having infrared absorbency, ITO imparts heat ray absorbency to the antifogging layer and thus is expected to bring about an antifogging effect by the heat ray absorption.

The antifogging layer 2 preferably undergoes no peeling after an acid resistance test in which it is immersed in a 21 to 25°C, 0.1 N nitric acid aqueous solution for three hours. The antifogging layer 2 having a silica filler is likely to have improved peel resistance after the aforesaid acid resistance test and thus is preferable. An especially suitable amount of the silica filler is 5 to 10 parts by mass.

An average particle size of the filler is preferably 0.01 to 0.3 µm, and more preferably 0.01 to 0.1 µm. The average particle size is a volume-based median size measured with a laser diffraction/scattering particle size analyzer.

As illustrated in Fig. 2, the foundation layer 3 is provided between the transparent base 1 and the antifogging layer 2. The presence of the foundation layer 3 enables a reduction in stress acting between the transparent base 1 and the antifogging layer 2, leading to improved adhesion between the transparent base 1 and the antifogging layer 2.

A composing material of the foundation layer 3 is an epoxy resin cured material having a structure in which a silicon atom and three electron-withdrawing groups are bonded. Examples of the electron-withdrawing group include a phenyl group, a vinyl group, and an alkoxy group. The foundation layer 3 whose composing material has the epoxy bond and the structure in which the silicon atom and the three electron-withdrawing groups are bonded has increased expansivity to prevent the antifogging layer 2 from easily peeling off.

Fig. 3 is a sectional view schematically illustrating an automobile glass according to one embodiment of the present invention. As illustrated in Fig. 3, the automobile glass according to the embodiment of the present invention includes: a laminated glass composed of two curved glass plates 4 and an intermediate film 5; and the foundation layer 3 and the antifogging layer 2 provided on a concave surface of the laminated glass.

### (Method of Manufacturing Antifogging Article)

A method of manufacturing the antifogging article according to the present invention includes: a step of coating the transparent base with an antifogging agent composition; and a step of heat-treating the transparent base coated with the antifogging agent composition. The manufacturing method may include other steps as required. The heat treatment cures the antifogging agent composition to form the antifogging layer.

As a method of applying the antifogging agent composition, an ordinary coating method such as spin coating, dip coating, spray coating, flow coating, or die coating is usable. The flow coating is especially suitably usable in the case where the transparent base has a curved shape.

Subsequently, as a result of the heating of the transparent base coated with the antifogging agent composition, the antifogging layer is formed. For the heating, an electric furnace, a gas furnace, an infrared heating furnace, or the like is usable. The temperature and time of the heat treatment can be appropriately adjusted depending on the kind of the antifogging agent composition and the material of the transparent base. For example, the temperature is within a range of 70 to 300°C. Further, the heating time is 1 to 180 minutes, for instance.

As the foundation layer is provided between the transparent base and the antifogging layer, the foundation layer is formed on the transparent base before the antifogging layer is formed, and the antifogging layer is formed on the foundation layer. The foundation layer can be formed by an appropriate known manufacturing method according to the type of the film.

### (Antifogging Agent Composition)

The antifogging agent composition according to the present invention will be hereinafter described. The antifogging agent composition contains at least one kind of water-soluble epoxy resin, at least one kind of aluminum compound, and at least one kind of alkoxysilane compound and/or a partially hydrolyzed condensate of alkoxysilane (hereinafter, also comprehensively referred to as "alkoxysilane compound etc."). The antifogging agent composition may further contain other components as required. Owing to the curing of the water-soluble epoxy resin caused by the aluminum compound and the alkoxysilane compound etc., it is possible to form a layer excellent in a water absorbing property and abrasion resistance and also excellent in appearance.

This can be thought as follows, for instance. A silanol compound produced from the alkoxysilane compound etc. and the aluminum compound form, for example, a composite catalyst, so that cations such as protons are produced. It can be thought that the produced cations cause a polymerization reaction of an epoxy group of the water-soluble epoxy compound, so that the antifogging agent composition progresses in its curing reaction to form a cured layer. With such a composition, the antifogging agent composition does not contain a curing agent, a curing catalyst, or the like (for example, an amine compound, an amino group-containing compound) that can be a cause to increase the yellowness index (YI), and this is thought to be a reason why a layer excellent in appearance can be formed.

The content of the resin component in the antifogging agent composition is 95 to 50% by mass, and preferably 90 to 60% by mass in the composition. Note that the content of the resin component is the content in terms of the solid content. The content in terms of the solid content of a component refers to a mass of a residue except a volatile component such as water.

### (Water-soluble Epoxy Resin)

The water-soluble epoxy resin is not particularly limited as long as it is a water-soluble resin having at least one epoxy group, and is a combination of a first resin with a 90% water-soluble rate or more (hereinafter, also referred to as a "high water-soluble resin") and a second resin with a 50% water-soluble rate or less (hereinafter, also referred to as a "low water-soluble resin"). The use of the combination of the high water-soluble resin and the low water-soluble resin facilitates adjusting the antifogging film to a film which is high both in a water absorbing property and abrasion resistance. The water-soluble rate refers to a dissolution rate when a 10 part by mass resin is mixed to 90 part by mass water (for example, ion-exchanged water) at 25°C.

The water-soluble rate of the high water-soluble resin is 90% or more, preferably 93% or more, and more preferably 95% or more. Further, the upper limit of the water-soluble rate of the high water-soluble resin is not particularly limited, but can be 100%.

The high water-soluble resin is preferably an epoxy resin having an epoxy group as a curable group. The epoxy resin is not particularly limited as long as it is a resin having one epoxy group or more in one molecule, and examples thereof include an aliphatic epoxy resin, an alicyclic epoxy resin, and an aromatic epoxy resin. The epoxy resin is preferably an aliphatic epoxy resin. The epoxy resin being an aliphatic epoxy resin has a high water-soluble rate and tends to have a higher water absorbing property. Accordingly, the antifogging agent composition containing an aliphatic epoxy resin as the high water-soluble resin has a higher antifogging property. The epoxy resin whose water-soluble rate is 90% or more is preferably an aliphatic epoxy resin having at least one of an ethylene oxide (-CH₂CH₂O-) structure, a propylene oxide (-CH(CH₃)CH₂O-) structure, and a hydroxyl group.

The aliphatic epoxy resin is preferably a polyfunctional aliphatic epoxy resin that is bifunctional or more. The epoxy resin being a polyfunctional aliphatic epoxy resin more improves the reactivity of the resin component when the antifogging layer is formed, making it possible to obtain the antifogging layer more excellent in peel resistance. Polyfunctional is bifunctional or more, preferably 2 to 8 functional, preferably 3 to 8 functional, and especially preferably 3.5 to 5 functional. The polyfunctional aliphatic epoxy resin is preferably a glycidyl ether compound of alcohol that is bifunctional or more, and more preferably a glycidyl ether compound of alcohol that is trifunctional or more. The alcohol that is bifunctional or more is preferably aliphatic alcohol, alicyclic alcohol, or sugar alcohol.

Examples of the epoxy resin whose water-soluble rate is 90% or more include monofunctional epoxy resins such as phenoxy(ethylene oxide)₅glycidyl ether and lauryloxy(ethylene oxide)₁₅glycidyl ether; bifunctional epoxy resins such as ethylene glycol diglycidyl ether, diethylene glycol diglycidyl ether, polyethylene glycol diglycidyl ether, and polypropylene glycol diglycidyl ether; and trifunctional or more epoxy resins such as glycerol polyglycidyl ether, polyglycerol polyglycidyl ether, and sorbitol polyglycidyl ether. Note that, in polypropylene glycol diglycidyl ether whose water-soluble rate is 90% or more, the unitage of the propylene oxide structure is more than 2 and 5 or less per molecule.

The water-soluble rate of the low water-soluble resin is 50% or less, preferably 40% or less, and more preferably less than 20%. The lower limit of the water-soluble rate of the low water-soluble resin is not particularly limited, but can be 0%.

The low water-soluble resin is also preferably an epoxy resin, and is more preferably an epoxy resin whose water-soluble rate is less than 20%. As the low water-soluble resin, an aliphatic epoxy resin or an aromatic epoxy resin is preferable, an aromatic epoxy resin is more preferable, and a polyfunctional aromatic epoxy resin is especially preferable. The epoxy resin being an aromatic epoxy resin is low in water-soluble rate, and is a resin lower in expansion coefficient than an aliphatic epoxy resin owing to the presence of an aromatic ring. Accordingly, the antifogging agent composition containing an aromatic epoxy resin as the low water-soluble resin is more excellent in peel resistance. Further, the epoxy resin being a polyfunctional aromatic epoxy resin more improves reactivity, making it possible to obtain an antifogging layer more excellent in peel resistance. Further, the low water-soluble resin is preferably an epoxy resin not having a hydroxyl group or an ethylene oxide structure, and is preferably an epoxy resin having neither a hydroxyl group nor an ethylene oxide structure.

The contents of the high water-soluble resin and the low water-soluble resin in the antifogging agent composition are not particularly limited, but to the total 100 parts by mass of the high water-soluble resin and the low water-soluble resin, the contents of the high water-soluble resin and the content of the low water-soluble resin are preferably 10 to 90 parts by mass and 90 to 10 parts by mass respectively, the contents of the high water-soluble resin and the content of the low water-soluble resin are more preferably 30 to 90 parts by mass and 70 to 10 parts by mass respectively, and the content of the high water-soluble resin and the content of the low water-soluble resin are especially preferably 50 to 80 parts by mass and 50 to 20 parts by mass respectively. When the content of the high water-soluble resin to the total 100 parts by mass of the high water-soluble resin and the low water-soluble resin is 10 parts by mass or more, the antifogging property more improves, and when it is 90 parts by mass or less, peel resistance more improves.

The content of the resin component in the antifogging agent composition is 95 to 50% by mass, and preferably 90 to 60% by mass in the composition. Note that the content of the resin component is the content in terms of the solid content. In the present invention, the content in terms of the solid content of a component means a mass of a residue except a volatile component such as water.

The antifogging agent composition may further contain a curable resin other than the epoxy resin as required. Examples of a crosslinkable group other than an epoxy group include a vinyl group, a styryl group, an acryloyloxy group, a methacryloyloxy group, an amino group, an ureido group, a chloro group, a thiol group, a sulfide group, a hydroxyl group, a carboxy group, and an acid anhydride group. The number of the crosslinkable groups that the other curable resin has is not particularly limited. As the other curable resin, one kind may be used alone, or two kinds or more may be used in combination.

The aluminum compound can work together with the silanol compound produced from the alkoxysilane compound to form the catalyst for the curing reaction of the epoxy resin. The aluminum compound is an organic aluminum compound, and has at least one of an aluminum alkoxide structure and an aluminum chelate structure, and preferably has at least the aluminum chelate structure.

The aluminum compound is preferably a compound expressed by the following general formula (I) from a viewpoint of curability of the antifogging agent composition.

AlXₙY₍₃₋ₙ₎ (I)

X each independently represents an alkoxy group with a carbon number of 1 to 4, Y each independently represents a ligand produced from a compound selected from a group consisting of M¹COCH₂COM² and M³COCH₂COOM⁴, M¹, M², and M³ each independently represent an alkyl group with a carbon number of 1 to 4, M⁴ represents a hydrogen atom or an alkyl group with a carbon number of 1 to 4, and n represents the number of 0 to 2.

The alkoxy group with the carbon number of 1 to 4 represented by X is a straight-chain, branched-chain, or cyclic alkoxy group, and specific examples thereof include a methoxy group, an ethoxy group, a propoxy group, an isopropyloxy group, a cyclopropyloxy group, a butoxy group, an isobutyloxy group, a sec-butyloxy group, and a tert-butyloxy group. Among these, an alkoxy group with a carbon number of 2 to 4 is preferable.

The alkyl groups with the carbon number of 1 to 4 represented by M¹ to M⁴ each is a straight-chain, branched-chain, or cyclic alkyl group, and specific examples thereof include a methyl group, an ethyl group, a propyl group, an isopropyl group, a cyclopropyl group, a butyl group, an isobutyl group, a sec-butyl group, and a tert-butyl group. Among these, an alkyl group with a carbon number of 1 to 3 is preferable. The alkyl groups with the carbon number of 1 to 4 represented by M¹ to M⁴ each may have a substituent such as a halogen atom.

Specific examples of the aluminum compound include aluminum alkoxide such as aluminum butoxide(tributoxy aluminum), aluminum tert-butoxide, aluminum sec-butoxide, aluminum ethoxide, aluminum isopropoxide, aluminum ethoxide, aluminum methoxide, and mono-sec-butoxy-diisopropoxy aluminum; and aluminum chelate such as tris(2,4-pentanedionato)aluminum(III), hexafluoroacetylacetonato aluminum, trifluoroacetylacetonato aluminum, tris(2,2,6,6-tetramethyl-3,5-heptanedionato)aluminum(III), aluminum ethyl acetoacetate diisopropylate, aluminum methyl acetoacetate diisopropylate, aluminum tris(ethylacetoacetate), and aluminum mono-acetylacetonate bis-(ethylacetoacetate). As the aluminum compound, one kind may be used alone, or two kinds or more may be used in combination.

The content of the aluminum compound in the antifogging agent composition to 100 parts by mass of the epoxy resin component is 0.1 to 20 parts by mass, preferably 0.3 to 15 parts by mass, and more preferably 0.5 to 10 parts by mass. Further, this content to the alkoxysilane compound is preferably 0.1 to 60 parts by mass, more preferably 1 to 55 parts by mass, and especially preferably 2 to 50 parts by mass.

The alkoxysilane compound is a compound having, in one molecule, one to four alkoxy groups bonded to a silicon atom. The antifogging agent composition containing the alkoxysilane compound etc. as well as the aluminum compound exhibits excellent curability and can enhance adhesion between the base and the antifogging layer. The alkoxysilane compound is preferably contained as a partially hydrolyzed condensate resulting from the partial condensation of at least partial molecules after the molecules are partially hydrolyzed. The antifogging agent composition containing the alkoxysilane compound as the partially hydrolyzed condensate tends to more improve adhesion between the formed antifogging layer and the base.

The alkoxysilane compound is preferably a compound expressed by the following general formula (II).

(R¹O)ₚSiR²₍₄₋ₚ₎ (II)

In the formula, R¹ each independently represents an alkyl group with a carbon number of 1 to 4, R² each independently represents an alkyl group with a carbon number of 1 to 10 that optionally has a substituent, and p represents the number of 1 to 4. When R¹ or R² is present in plurality, the plural R¹s or R²s may be identical or different.

Examples of the alkyl group with the carbon number of 1 to 4 represented by R¹ include a methyl group, an ethyl group, a propyl group, an isopropyl group, a butyl group, an isobutyl group, a sec-butyl group, and a tert-butyl group. R¹ is preferably an alkyl group with a carbon number of 1 to 2 as a methyl group or an ethyl group.

The alkyl group with the carbon number of 1 to 10 represented by R² may be any of a straight-chain one, a branched-chain one, and a cyclic one, and examples thereof include a methyl group, an ethyl group, a propyl group, an isopropyl group, a cyclopropyl group, a butyl group, an isobutyl group, a sec-butyl group, a tert-butyl group, a hexyl group, a cyclohexyl group, an octyl group, and a decyl group. R² is preferably an alkyl group with a carbon number 1 to 6, and more preferably an alkyl group with a carbon number of 2 to 4. Note that the carbon number in R² means a carbon number of an alkyl group portion except a substituent.

R² may have a substituent. The kind of the substituent is not particularly limited, and can be appropriately selected according to the purpose or the like. Specific examples of the substituent include an epoxy group, a glycidoxy group, a methacryloyloxy group, an acryloyloxy group, an isocyanato group, a hydroxy group, an amino group, an arylamino group, an alkylamino group, an aminoalkylamino group, an ureido group, and a mercapto group. The substituent is preferably at least on kind selected from a group consisting of an isocyanate group, an acid anhydride group, an epoxy group, and a glycidoxy group from a viewpoint of adhesion. In the case where R² has the substituent, the number of the substituents is not particularly limited, and is 1 to 2, for instance.

p is preferably 1 to 3, and more preferably 3. In a case where p is 3 or less, the formed antifogging layer tends to have more improved abrasion resistance than in a case of a compound whose p is 4 (that is, tetraalkoxysilane).

Specific examples of the alkoxysilane compound include tetraalkoxysilane compounds having, in one molecule, an alkoxy group bonded to four silicon atoms, such as tetramethoxysilane and tetraethoxysilane; monoalkyltrialkoxysilane compounds having, in one molecule, three alkoxy groups bonded to a silicon atom, such as 3 -glycidoxypropyltrimethoxysilane, 3 -glycidoxypropyltriethoxysilane, 3-methacryloxypropyltrimethoxysilane, 3-acryloxypropyltrimethoxysilane, 3-isocyanatopropyltrimethoxysilane, N-(2-aminoethyl)-3-aminopropyltrimethoxysilane, 3-aminopropyltrimethoxysilane, N-phenyl-3-aminopropyltrimethoxysilane, 3-ureidopropyltriethoxysilane, and 3-mercaptopropyltrimethoxysilane; and dialkyldialkoxysilane compounds having, in one molecule, two alkoxy groups bonded to a silicon atom, such as 3-glycidoxypropylmethyldiethoxysilane, 3-methacryloxypropylmethyldimethoxysilane, N-(2-aminoethyl)-3-aminopropylmethyldimethoxysilane, and 3-aminopropylmethyldimethoxysilane.

Among these, a monoalkyltrialkoxysilane compound is preferable, a monoalkyltrialkoxysilane having an epoxy group as a substituent is more preferable, and at least one kind selected from 3-glycidoxypropyltrimethoxysilane and 3-glycidoxypropyltriethoxysilane is especially preferable. As the alkoxysilane compound, one kind may be used alone, or two kinds or more may be used in combination.

The content of the alkoxysilane compound is appropriately selected according to the aluminum compound etc. The content of the alkoxysilane compound to the total 100 parts by mass of the epoxy resin component is 5 to 40 parts by mass, and preferably 8 to 30 parts by mass. When the content of the alkoxysilane compound is 5 parts by mass or more to the total 100 parts by mass of the epoxy resin component, adhesion between the antifogging layer and the base more improves, and peel resistance tends to improve more, and when this content is 40 parts by mass or less, the antifogging layer, even if exposed to high temperatures, tends to undergo less coloring caused by the oxidation of the resin.

The antifogging agent composition can contain more components as required. Examples of such components include a curing agent, a filler, a leveling agent, a surface active agent, a UV absorbent, a light stabilizer, and an antioxidant.

The curing agent is not particularly limited as long as it is capable of forming the cured material by reacting with the epoxy resin, and one appropriately selected from commonly used epoxy resin curing agents is usable. Examples of a reactive group that the curing agent has include a carboxy group, an amino group, an acid anhydride group, and a hydroxyl group. The number of the reactive groups that one molecule of the curing agent has is preferably 1.5 or more, and more preferably 2 to 8 on average. The curing agent in which the number of the reactive groups is 1.5 or more enables the antifogging layer to have an excellent balance between the antifogging property and abrasion resistance.

Specific examples of the curing agent include a polyamine-based compound, a polycarboxylic acid-based compound (including a polycarboxylic acid anhydride), a polyol-based compound, a polyisocyanate-based compound, a polyepoxy-based compound, dicyandiamides, and organic acid dihydrazides. Among these, a polyamine-based compound, a polyol-based compound, a polycarboxylic acid anhydride, and the like are preferable, and a polyol-based compound and a polycarboxylic acid anhydride are more preferable. As the curing agent, one kind may be used alone, or two kinds or more may be used in combination.

In the case where the antifogging agent composition contains the curing agent, its content to 100 parts by mass of the epoxy resin component is preferably 0.1 to 30 parts by mass, and more preferably 0.2 to 28 parts by mass. In the antifogging agent composition, the content of the curing agent to 100 parts by mass of the epoxy resin component is also preferably 30 parts by mass or less, and more preferably 0.5 parts by mass or less, and it is especially preferable that the antifogging agent composition practically contains no curing agent. Here, "practically contains no curing agent" means that the unavoidable mixture of a compound that can act as the curing agent is not excluded.

In the case where the antifogging agent composition contains the filler, the content of the filler to the total 100 parts by mass of the epoxy resin component is 1 to 20 parts by mass, and preferably 1 to 10 parts by mass. In a case where the content of the filler is 1 part by mass or more, an effect of reducing curing shrinkage of the resin tends to improve, and in a case where this content is 20 parts by mass or less, the antifogging property tends to improve because sufficient space for water absorption can be kept.

In the case where the antifogging agent composition contains the leveling agent, the thickness of the formed antifogging layer tends to be uniform, facilitating reducing optical distortion of the antifogging article. Examples of the leveling agent include a silicone-based leveling agent and a fluorine-based leveling agent, out of which a silicone-based leveling agent is preferable. Examples of the silicone-based leveling agent include amino-modified silicone, carbonyl-modified silicone, epoxy-modified silicone, polyether-modified silicone, and alkoxy-modified silicone.

The content of the leveling agent to 100 parts by mass of the solid content of the antifogging agent composition is preferably 0.02 to 1 part by mass, more preferably 0.02 to 0.3 parts by mass, and especially preferably 0.02 to 0.1 parts by mass. In a case where the content of the leveling agent is 0.02 parts by mass or more to 100 parts by mass of the solid content of the antifogging agent composition, the thickness of the antifogging layer tends to be more uniform, and in a case where this content is 1 part by mass or less, the cloudiness of the antifogging layer tends to be inhibited.

The surface active agent is not particularly limited, and examples thereof include a nonionic surface active agent, a cationic surface active agent, a betaine-based surface active agent, and an anionic surface active agent. The surface active agent having an alkyleneoxy chain such as an ethyleneoxy chain or a propyleneoxy chain can impart a hydrophilic property to the antifogging agent composition and tends to more improve the antifogging property of the antifogging layer, and thus is preferable.

### (Examples)

Hereinafter, the present invention will be further described based on examples. Note that examples 24 to 26, 28, 29, and 31 to 33 are inventive examples, examples 1 to 3, 10, 12 to 17, 19 to 23, and 34 are reference examples, and examples 4 to 9, 11, 18, 27, and 30 are comparative examples.

Abbreviations and physical properties of compounds used in the examples and the comparative examples are summarized below.
(1) Epoxy Resin
(1-1) Water-soluble Resin
   - EX1610: Denacol EX-1610 (brand name, manufactured by Nagase ChemteX Corporation, aliphatic polyglycidyl ether, water-soluble rate = 100%)
   - EX421: Denacol EX-421 (brand name, manufactured by Nagase ChemteX Corporation, diglycerol polyglycidyl ether, water-soluble rate = 88%)
   - EX313: Denacol EX-313 (brand name, manufactured by Nagase ChemteX Corporation, glycerol polyglycidyl ether, water-soluble rate = 99%)
(1-2) Water-insoluble Resin
   - E1001: jER1001 (brand name, manufactured by Mitsubishi Chemical Corporation, bisphenol A epoxy resin, water-soluble rate = insoluble)
   - EP4100: ADEKA RESIN EP4100 (brand name, manufactured by ADEKA Corporation, bisphenol A diglycidyl ether, water-soluble rate = insoluble: indicating that the water-soluble rate is less than 20%).
   - EX622: Denacol EX-622 (brand name, manufactured by Nagase ChemteX Corporation, sorbitol polyglycidyl ether, water-soluble rate = insoluble)
(2) Chelate Compound
   - Al(acac)₃: aluminum tris-acetylacetonate (manufactured by Kanto Chemical Co., Inc.)
   - Zr(acac)₄: zirconium acetylacetonate (manufactured by Matsumoto Fine Chemical Co., Ltd.)
   - Fe(acac)₃: iron(III)acetylacetonate (manufactured by Tokyo Chemical Industry Co., Ltd.)
   - Ti(acac)₄: titanium tetra acetylacetonate (manufactured by Matsumoto Fine Chemical Co., Ltd.)
(3) Alkoxysilane Compound
   - GPTMS: 3-glycidoxypropyltrimethoxysilane (manufactured by JNC Corporation: Sila-Ace S510)
   - MTMS: methyltrimethoxysilane (manufactured by Junsei Chemical Co., Ltd.)
   - APTMS: 3-aminopropyltrimethoxysilane (manufactured by Shin-Etsu Chemical Co., Ltd.: KBM903)
(4) Curing Agent
   - T403: JEFFAMINE T403, polyoxyalkylene triamine (manufactured by Huntsman Corporation)
   - Ph₃SiOH: triphenylsilanol (manufactured by Kanto Chemical Co., Inc.)
(5) Solvent
   - SOLMIX AP-1: manufactured by Japan Alcohol Trading Co., Ltd., a mixed solvent of ethanol: 2-propanol : methanol = 85.5 : 13.4 : 1.1 (mass ratio)
   - PIP: manufactured by Daishin-Chemical Co., Ltd., a mixed solvent of ethanol: isopropyl alcohol: n-propyl alcohol = 88 : 4 : 8 (mass ratio)
   - MEK: methyl ethyl ketone, manufactured by Daishin-Chemical Co., Ltd.
(6) Filler
   - SiO₂ particles: methanol silica sol: silica particle dispersion, manufactured by Nissan Chemical Industries, Ltd., SiO₂ content 30% by mass

Manufacturing methods of the examples will be hereinafter described.

### (Chelate Compound Solution A1)

3.0 g of Al(acac)₃ and 97.0 g of methanol (Junsei Chemical Co., Ltd.; extra pure) were put in a glass vessel in which an agitator and a thermometer were set, followed by ten-minute agitation at 25°C, whereby a chelate compound solution Al being an aluminum compound solution was obtained.

### (Chelate Compound Solution A2)

3.0 g of Zr(acac)₄ and 97.0 g of methanol (Junsei Chemical Co., Ltd.; extra pure) were put in a glass vessel in which an agitator and a thermometer were set, followed by ten-minute agitation at 25°C, whereby a chelate compound solution A2 being a zirconium compound solution was obtained.

### (Chelate Compound Solution A3)

3.0 g of Fe(acac)₃ and 97.0 g of methanol (Junsei Chemical Co., Ltd.; extra pure) were put in a glass vessel in which an agitator and a thermometer were set, followed by ten-minute agitation at 25°C, whereby a chelate compound solution A3 being an iron compound solution was obtained.

### (Chelate Compound Solution A4)

3.0 g of Ti(acac)₄ and 97.0 g of methanol (Junsei Chemical Co., Ltd.; extra pure) were put in a glass vessel in which an agitator and a thermometer were set, followed by ten-minute agitation at 25°C, whereby a chelate compound solution A4 being a titanium compound solution was obtained.

### [Example 1]

31.4 g of the water-soluble epoxy EX1610, 33.4 g of the chelate compound solution Al, 18.4 g of SOLMIX AP-1, 8.5 g of ion-exchanged water, 0.09 g of nitric acid (60 wt%, manufactured by Junsei Chemical Co., Ltd.), and 8.1 g of the alkoxysilane compound GPTMS were put in a glass vessel in which an agitator and a thermometer were set, followed by 60-minute agitation at 25°C, whereby an antifogging agent composition for forming an antifogging layer was obtained.

Thereafter, a laminated glass substrate (100 mm x 100 mm YI: -1.8) made of clean soda-lime glass whose surface was polished with cerium oxide, washed and dried was used as a base, and the antifogging agent composition was applied on the surface of the glass substrate by spin coating. Next, the resultant was held in a 100°C electric furnace for thirty minutes, whereby an antifogging article having an antifogging layer was obtained.

### [Example 2]

An antifogging article was obtained in the same manner as in the example 1 except that, in the example 1, the water-soluble epoxy EX1610 was replaced by the water-soluble epoxy EX421.

### [Example 3]

An antifogging article was obtained in the same manner as in the example 1 except that, in the example 1, the water-soluble epoxy EX1610 was replaced by the water-soluble epoxy EX313.

### [Example 4]

An antifogging article was obtained in the same manner as in the example 1 except that, in the example 1, the chelate compound solution A1 was replaced by the chelate compound solution A2.

### [Example 5]

An antifogging article was obtained in the same manner as in the example 1 except that, in the example 1, the chelate compound solution Al was replaced by the chelate compound solution A3.

### [Example 6]

An antifogging article was obtained in the same manner as in the example 1 except that, in the example 1, the chelate compound solution Al was replaced by the chelate compound solution A4.

### [Example 7]

An antifogging article was obtained in the same manner as in the example 1 except that, in the example 1, the chelate compound solution Al was replaced by the curing agent T403 and the alkoxysilane compound GPTMS was replaced by the alkoxysilane compound APTMS.

### [Example 8]

An antifogging article was obtained in the same manner as in the example 1 except that, in the example 1, an amount of the chelate compound solution Al was changed from 33.4 g to 11.1 g and an amount of SOLMIX AP-1 was changed from 18.4 g to 40.8 g.

### [Example 9]

An antifogging article was obtained in the same manner as in the example 1 except that, in the example 1, an amount of the chelate compound solution Al was changed from 33.4 g to 22.3 g and an amount of SOLMIX AP-1 was changed from 18.4 g to 29.6 g.

### [Example 10]

29.1 g of the water-soluble epoxy EX1610, 51.7 g of the chelate compound solution Al, 3.7 g of SOLMIX AP-1, 7.9 g of ion-exchanged water, 0.08 g of nitric acid (60 wt%, manufactured by Junsei Chemical Co., Ltd.), and 7.6 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 11]

33.0 g of the water-soluble epoxy EX1610, 33.4 g of the chelate compound solution Al, 32.7 g of SOLMIX AP-1, 1.9 g of ion-exchanged water, 0.02 g of nitric acid (60 wt%, manufactured by Junsei Chemical Co., Ltd.), and 1.8 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 12]

32.5 g of the water-soluble epoxy EX1610, 33.4 g of the chelate compound solution Al, 28.3 g of SOLMIX AP-1, 3.9 g of ion-exchanged water, 0.04 g of nitric acid (60 wt%, manufactured by Junsei Chemical Co., Ltd.), and 3.8 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 13]

30.0 g of the water-soluble epoxy EX1610, 33.4 g of the chelate compound solution Al, 9.0 g of SOLMIX AP-1, 14.0 g of ion-exchanged water, 0.15 g of nitric acid (60 wt%, manufactured by Junsei Chemical Co., Ltd.), and 13.4 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 14]

30.6 g of the water-soluble epoxy EX1610, 0.8 g of the water-insoluble epoxy EP4100, 33.4 g of the chelate compound solution Al, 18.5 g of SOLMIX AP-1, 8.5 g of ion-exchanged water, 0.09 g of nitric acid (60 wt%, manufactured by Junsei Chemical Co., Ltd.), and 8.2 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 15]

29.8 g of the water-soluble epoxy EX1610, 1.6 g of the water-insoluble epoxy EP4100, 33.4 g of the chelate compound solution Al, 18.4 g of SOLMIX AP-1, 8.5 g of ion-exchanged water, 0.09 g of nitric acid (60 wt%, manufactured by Junsei Chemical Co., Ltd.), and 8.2 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 16]

28.2 g of the water-soluble epoxy EX1610, 3.1 g of the water-insoluble epoxy EP4100, 33.4 g of the chelate compound solution Al, 18.4 g of SOLMIX AP-1, 8.5 g of ion-exchanged water, 0.09 g of nitric acid (60 wt%, manufactured by Junsei Chemical Co., Ltd.), and 8.2 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 17]

25.1 g of the water-soluble epoxy EX1610, 6.3 g of the water-insoluble epoxy EP4100, 33.4 g of the chelate compound solution A1, 18.4 g of SOLMIX AP-1, 8.5 g of ion-exchanged water, 0.09 g of nitric acid (60 wt%, manufactured by Junsei Chemical Co., Ltd.), and 8.2 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 18]

18.8 g of the water-soluble epoxy EX1610, 12.5 g of the water-insoluble epoxy EP4100, 33.4 g of the chelate compound solution Al, 18.4 g of SOLMIX AP-1, 8.5 g of ion-exchanged water, 0.09 g of nitric acid (60 wt%, manufactured by Junsei Chemical Co., Ltd.), and 8.2 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 19]

29.8 g of the water-soluble epoxy EX1610, 1.6 g of the water-insoluble epoxy E1001, 33.4 g of the chelate compound solution Al, 18.4 g of SOLMIX AP-1, 8.5 g of ion-exchanged water, 0.09 g of nitric acid (60 wt%, manufactured by Junsei Chemical Co., Ltd.), and 8.2 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 20]

29.8 g of the water-soluble epoxy EX1610, 1.6 g of the water-insoluble epoxy EX622, 33.4 g of the chelate compound solution A1, 18.4 g of SOLMIX AP-1, 8.5 g of ion-exchanged water, 0.09 g of nitric acid (60 wt%, manufactured by Junsei Chemical Co., Ltd.), and 8.2 g of the alkoxysilane compound GPTMS were put in a glass vessel in which an agitator and a thermometer were set, followed by 60-minute agitation at 25°C, whereby an antifogging agent composition for forming an antifogging layer was obtained. Thereafter, an antifogging article was obtained by the same manufacturing method as that of the antifogging article in the example 1.

### [Example 21]

An antifogging article was obtained in the same manner as in the example 15 except that, in the example 15, the alkoxysilane compound GPTMS was replaced by the alkoxysilane compound MTMS.

### [Example 22]

An antifogging article was obtained in the same manner as in the example 16 except that, in the example 16, the alkoxysilane compound GPTMS was replaced by the alkoxysilane compound MTMS.

### [Example 23]

An antifogging article was obtained in the same manner as in the example 17 except that, in the example 17, the alkoxysilane compound GPTMS was replaced by the alkoxysilane compound MTMS.

### [Example 24]

7.6 g of the water-insoluble epoxy EP4100, 10.3 g of the chelate compound solution Al, 1.0 g of the alkoxysilane compound Ph₃SiOH, 68.8 g of MEK, 4.5 g of SOLMIX AP-1, 2.9 g of ion-exchanged water, 0.03 g of nitric acid (60 wt%, manufactured by Junsei Chemical Co., Ltd.), and 4.9 g of the alkoxysilane compound GPTMS were put in a glass vessel in which an agitator and a thermometer were set, followed by 60-minute agitation at 25°C, whereby a foundation layer forming composition for forming a foundation layer was obtained.

Thereafter, a laminated glass substrate (100 mm x 100 mm YI: -1.8) made of clean soda-lime glass whose surface was polished with cerium oxide, washed and dried was used as a base, the foundation layer forming composition was applied on the surface of the glass substrate by spin coating, and the resultant was held in a 100°C electric furnace for thirty minutes, whereby a foundation layer was formed. The same antifogging layer as that of the example 21 was formed on the foundation layer, whereby an antifogging article was obtained.

### [Example 25]

An antifogging article was obtained in the same manner as in the example 24 except that the following changes were made in the foundation layer forming composition of the example 24: 6.4 g of the water-insoluble epoxy EP4100, 8.5 g of the chelate compound solution Al, 0.8 g of the alkoxysilane compound Ph₃SiOH, 68.5 g of MEK, 5.8 g of SOLMIX AP-1, 3.7 g of ion-exchanged water, 0.04 g of nitric acid (60 wt%, manufactured by Junsei Chemical Co., Ltd.), and 6.2 g of the alkoxysilane compound GPTMS.

### [Example 26]

An antifogging article was obtained in the same manner as in the example 24 except that the following changes were made in the foundation layer forming composition of the example 24: 5.2 g of the water-insoluble epoxy EP4100, 6.9 g of the chelate compound solution Al, 0.7 g of the alkoxysilane compound Ph₃SiOH, 68.3 g of MEK, 7.0 g of SOLMIX AP-1, 4.5 g of ion-exchanged water, 0.05 g of nitric acid (60 wt%, manufactured by Junsei Chemical Co., Ltd.), and 7.4 g of the alkoxysilane compound GPTMS.

### [Example 27]

An antifogging article was obtained in the same manner as in the example 24 except that the following changes were made in the foundation layer forming composition of the example 24: 5.2 g of the water-insoluble epoxy EP4100, 6.9 g of the chelate compound solution Al, 69.0 g of MEK, 7.0 g of SOLMIX AP-1, 4.5 g of ion-exchanged water, 0.05 g of nitric acid (60 wt%, manufactured by Junsei Chemical Co., Ltd.), and 7.4 g of the alkoxysilane compound GPTMS.

### [Example 28]

An antifogging article was obtained in the same manner as in the example 25 except that the following changes were made in the antifogging agent composition of the example 25: 29.7 g of the water-soluble epoxy EP1610, 1.6 g of the water-insoluble epoxy resin EP4100, 33.4 g of the chelate compound solution Al, 10.3 g of SOLMIX AP-1, 9.1 g of ion-exchanged water, 0.1 g of nitric acid (60 wt%, manufactured by Junsei Chemical Co., Ltd.), 7.2 g of the methanol silica sol, and 8.7 g of the alkoxysilane compound MTMS.

### [Example 29]

An antifogging article was obtained in the same manner as in the example 25 except that the following changes were made in the antifogging agent composition of the example 25: 28.3 g of the water-soluble epoxy EX1610, 1.5 g of the water-insoluble epoxy resin EP4100, 32.0 g of the chelate compound solution Al, 4.4 g of SOLMIX AP-1, 9.2 g of ion-exchanged water, 0.1 g of nitric acid (60 wt%, manufactured by Junsei Chemical Co., Ltd.), 14.6 g of the methanol silica sol, and 8.8 g of the alkoxysilane compound MTMS.

### [Example 30]

An antifogging article was obtained in the same manner as in the example 25 except that the following changes were made in the antifogging agent composition of the example 25: 22.7 g of the water-soluble epoxy EX1610, 1.2 g of the water-insoluble epoxy resin EP4100, 26.0 g of the chelate compound solution Al, 5.6 g of SOLMIX AP-1, 8.7 g of ion-exchanged water, 0.1 g of nitric acid (60 wt%, manufactured by Junsei Chemical Co., Ltd.), 27.4 g of the methanol silica sol, and 8.3 g of the alkoxysilane compound MTMS.

### [Example 31]

An antifogging article was obtained in the same manner as in the example 28 except that, in the example 28, the film thickness of the antifogging layer was changed to 12 µm by changing the formation condition of the antifogging layer.

### [Example 32]

An antifogging article was obtained in the same manner as in the example 28 except that, in the example 28, the film thickness of the antifogging layer was changed to 25 µm by changing the formation condition of the antifogging layer.

### [Example 33]

An antifogging article was obtained in the same manner as in the example 28 except that, in the example 28, the base was changed to a tempered glass substrate (100 mm x 10 mm YI: 7.5) made of clean soda-lime glass whose surface was polished with cerium oxide, washed and dried.

### [Example 34]

An antifogging article was obtained in the same manner as in the example 21 except that, in the example 21, the base was changed to a tempered glass substrate (100 mm x 100 mm YI: 7.5) made of clean soda-lime glass whose surface was polished with cerium oxide, washed and dried.

Tables 1 to 4 show composition ratios (mass%) of the materials of the antifogging layers and the foundation layers of the examples 1 to 34.

**[Table 1]**

| | | | Exam 1 | Exam 2 | Exam 3 | Exam 4 | Exam 5 | Exam 6 | Exam 7 | Exam 8 | Exam 9 |
|---|---|---|---|---|---|---|---|---|---|---|---|
| Anti-fogging layer | Water-soluble epoxy | EX1610 | 77.5 | - | - | 77.5 | 77.5 | 77.5 | 66.4 | 78.8 | 78.2 |
| | | EX421 | - | 77.5 | - | - | - | - | - | - | - |
| | | EX313 | - | - | 77.5 | - | - | - | - | - | - |
| | Water-insoluble epoxy | E1001 | - | - | - | - | - | - | - | - | - |
| | | EX622 | - | - | - | - | - | - | - | - | - |
| | | EP4100 | - | - | - | - | - | - | - | - | - |
| | Chelate compound | Al | 2.5 | 2.5 | 2.5 | - | - | - | - | 0.8 | 1.7 |
| | | Zr | - | - | - | 2.5 | - | - | - | - | - |
| | | Fe | - | - | - | - | 2.5 | - | - | - | - |
| | | Ti | - | - | - | - | - | 2.5 | | - | - |
| | Curing agent | T403 | - | - | - | - | - | - | 16.2 | - | - |
| | Alkoxysilane compound | MTMS | - | - | - | - | - | - | - | - | - |
| | | GPTMS | 20.0 | 20.0 | 20.0 | 20.0 | 20.0 | 20.0 | - | 20.2 | 20.1 |
| | | APTMS | - | - | - | - | - | - | 17.4 | - | - |
| | Filler | SiO2 particles | - | - | - | - | - | - | - | - | - |
| Foundation layer | Water-insoluble epoxy | EP4100 | Without | Without | Without | Without | Without | Without | Without | Without | Without |
| | Chelate compound | Al | | | | | | | | | |
| | Curing agent | Ph3SiOH | | | | | | | | | |
| | Alkoxysilane compound | GPTMS | | | | | | | | | |

**[Table 2]**

| | | | Exam 10 | Exam 11 | Exam 12 | Exam 13 | Exam 14 | Exam 15 | Exam 16 | Exam 17 | Exam 18 |
|---|---|---|---|---|---|---|---|---|---|---|---|
| Anti-fogging layer | Water-soluble epoxy | EX1610 | 76.3 | 92.2 | 87.3 | 67.7 | 75.6 | 73.6 | 69.8 | 62.2 | 46.5 |
| | | EX421 | - | - | - | - | - | - | - | - | - |
| | | EX313 | - | - | - | - | - | - | - | - | - |
| | Water-insoluble epoxy | E1001 | - | - | - | - | - | - | - | - | - |
| | | EX622 | - | - | - | - | - | - | - | - | - |
| | | EP4100 | - | - | - | - | 1.9 | 3.9 | 7.7 | 15.3 | 31.0 |
| | Chelate compound | Al | 4.1 | 2.8 | 2.7 | 2.3 | 2.5 | 2.5 | 2.5 | 2.5 | 2.5 |
| | | Zr | - | - | - | - | - | - | - | - | - |
| | | Fe | - | - | - | - | - | | - | - | - |
| | | Ti | - | - | - | - | - | - | - | - | - |
| | Curing agent | T403 | - | - | - | - | - | - | - | - | - |
| | Alkoxysilane compound | MTMS | - | - | - | - | - | - | - | - | - |
| | | GPTMS | 19.6 | 5.0 | 10.0 | 30.0 | 20.0 | 20.0 | 20.0 | 20.0 | 20.0 |
| | | APTMS | - | - | - | - | - | - | - | - | - |
| | Filler | SiO2 particles | - | - | - | - | - | - | - | - | - |
| Foundation layer | Water-insoluble epoxy | EP4100 | Without | Without | Without | Without | Without | Without | Without | Without | Without |
| | Chelate compound | Al | | | | | | | | | |
| | Curing agent | Ph3SiOH | | | | | | | | | |
| | Alkoxysilane compound | GPTMS | | | | | | | | | |

**[Table 3]**

| | | | Exam 19 | Exam 20 | Exam 21 | Exam 22 | Exam 23 | Exam 24 | Exam 25 | Exam 26 | Exam 27 |
|---|---|---|---|---|---|---|---|---|---|---|---|
| Anti-fogging layer | Water-soluble epoxy | EX1610 | 73.6 | 73.6 | 73.6 | 69.8 | 62.2 | 73.6 | 73.6 | 73.6 | 73.6 |
| | | EX421 | - | - | - | - | - | - | - | - | - |
| | | EX313 | - | - | - | - | - | - | - | - | - |
| | Water-insoluble epoxy | E1001 | 3.9 | - | - | - | - | - | - | - | - |
| | | EX622 | - | 3.9 | - | - | - | - | - | - | - |
| | | EP4100 | - | - | 3.9 | 7.7 | 15.3 | 3.9 | 3.9 | 3.9 | 3.9 |
| | Chelate compound | Al | 2.5 | 2.5 | 2.5 | 2.5 | 2.5 | 2.5 | 2.5 | 2.5 | 2.5 |
| | | Zr | - | - | - | - | - | - | - | - | - |
| | | Fe | - | - | - | - | - | - | - | - | - |
| | | Ti | - | - | - | - | - | - | - | - | - |
| | Curing agent | T403 | - | - | - | - | - | - | - | - | - |
| | Alkoxysilane compound | MTMS | - | - | 20.0 | 20.0 | 20.0 | 20.0 | 20.0 | 20.0 | 20.0 |
| | | GPTMS | 20.0 | 20.0 | - | - | - | - | - | - | - |
| | | APTMS | - | - | - | - | - | - | - | - | - |
| | Filler | SiO2 particles | - | - | - | - | - | - | - | - | - |
| Foundation layer | Water-insoluble epoxy | EP4100 | Without | Without | Without | Without | Without | 55.6 | 46.8 | 38.5 | 40.5 |
| | Chelate compound | Al | | | | | | 2.2 | 1.9 | 1.6 | 1.6 |
| | Curing agent | Ph3SiOH | | | | | | 7.2 | 6.0 | 5.0 | - |
| | Alkoxysilane compound | GPTMS | | | | | | 35.0 | 45.3 | 55.0 | 57.9 |

**[Table 4]**

| | | | Exam 28 | Exam 29 | Exam 30 | Exam 31 | Exam 32 | Exam 33 | Exam 34 |
|---|---|---|---|---|---|---|---|---|---|
| Anti-fogging layer | Water-soluble epoxy | EX1610 | 69.0 | 64.4 | 73.6 | 69.0 | 69.0 | 69.0 | 73.6 |
| | | EX421 | - | - | - | - | - | - | - |
| | | EX313 | - | - | - | - | - | - | - |
| | Water-insoluble epoxy | E1001 | - | - | - | - | - | - | - |
| | | EX622 | - | - | - | - | - | - | - |
| | | EP4100 | 3.6 | 3.4 | 3.9 | 3.6 | 3.6 | 3.6 | 3.9 |
| | Chelate compound | Al | 2.4 | 2.2 | 2.5 | 2.4 | 2.4 | 2.4 | 2.5 |
| | | Zr | - | - | - | - | - | - | - |
| | | Fe | - | - | - | - | - | - | - |
| | | Ti | - | - | - | - | - | - | - |
| | Curing agent | T403 | - | - | - | - | - | - | - |
| | Alkoxysilane compound | MTMS | 20.0 | 20.0 | 20.0 | 20.0 | 20.0 | 20.0 | 20.0 |
| | | GPTMS | - | - | - | - | - | - | - |
| | | APTMS | - | - | - | - | - | - | - |
| | Filler | SiO2 particles | 5.0 | 10.0 | 20.0 | 5.0 | 5.0 | 5.0 | - |
| Foundation layer | Water-insoluble epoxy | EP4100 | 46.8 | 46.8 | 46.8 | 46.6 | 46.6 | 46.6 | Without |
| | Chelate compound | Al | 1.9 | 1.9 | 1.9 | 1.9 | 1.9 | 1.9 | |
| | Curing agent | Ph3SiOH | 6.0 | 6.0 | 6.0 | 6.0 | 6.0 | 6.0 | |
| | Alkoxysilane compound | GPTMS | 45.3 | 45.3 | 45.3 | 45.5 | 45.5 | 45.5 | |

Subsequently, the antifogging articles of the examples 1 to 34 were subjected to the following evaluations.

### [Film Thickness]

Sectional images of the antifogging articles were photographed with a scanning electron microscope (manufactured by Hitachi Ltd., S4300), and the film thickness of each of their resin layers was measured.

### [Antifogging Performance]

The antifogging article after left under a 23°C and 50% relative humidity environment for one hour was installed in a hermetic state, with its surface where the resin layer was provided being above a 35°C hot water bath by an 85 mm distance from a hot water surface, and the antifogging performance was evaluated based on the antifogging time (T₃₅) [second] from the start of the installation up to an instant when haze or distortion by a water film was visually recognized. Soda-lime glass not provided with the antifogging film underwent haze in one to two seconds. The antifogging articles of the examples are those whose antifogging time T₃₅ is eighty seconds or more, and those whose antifogging time T₃₅ is 100 seconds or more are more preferable.

### [Abrasion Resistance]

Abrasion resistance was evaluated by an abrasion resistance test in conformity with JIS R3212 (vehicle interior side) (2008) in which an abrasive wheel CS-10F was used, and the abrasive wheel was brought into contact with the surface of the antifogging layer and was rotated 100 times under a 4.90 N load by a 5130 abrasion tester manufactured by Taber Industries. The antifogging articles of the examples are those in which ΔH which is a variation from haze (Hb) before the test to haze (Ha) after the test is 4.0% or less.

### [Yellowness Index]

The yellowness index (YI) of each of the antifogging articles was measured according to the standard of JIS Z8722, using a spectrophotometer (manufactured by Hitachi, Ltd.: U-4100). Based on the yellowness index thus measured, a variation ΔYI in the yellowness index was calculated. A calculation method is to [a yellowness index (YI₁) of the transparent base with the antifogging film before a 100°C and 500-hour heat resistance acceleration test (initial period)] - [a yellowness index (YI₂) of the transparent base with the antifogging film after the 100°C and 500-hour heat resistance acceleration test (after heat resisting)], and the calculated value was defined as the variation ΔYI in the yellowness index of the antifogging article.

The antifogging articles of the examples are those in which the variation ΔYI in the yellowness index stipulated in JIS K7373 is 3 or less.

### [Moisture Resistance]

In the evaluation of moisture resistance, a case where no peeling occurs after the 2000-hour holding in a 50°C and 95% relative humidity thermohygrostat is evaluated as having moisture resistance. The presence/absence of the peeling was visually confirmed.

### [Boil Test Performance]

A case where no peeling occurs after the boil test (100°C, two hours) stipulated in JIS R3212 was evaluated as having boil test performance. The presence/absence of the peeling was visually confirmed.

### [Acid Resistance]

A case where no peeling occurs after three-hour immersion in a 21 to 25°C, 0.1 N nitric acid aqueous solution was evaluated as having acid resistance. The presence/absence of the peeling was visually confirmed.

Table 5 shows the results.

**[Table 5-1]**

| | Evaluated item | | | | | | | | |
|---|---|---|---|---|---|---|---|---|---|
| | Film thickness (µm) | T35(s) | ΔH(%) | Initial YI | YI after heat resisting (100°C, 500 hr) | YI variation (ΔYI) | Moisture resistance | Boil (100°C, 2 hr) | Acid resistance |
| Exam 1 | 18.0 | 150 | 3.8 | -1.8 | -0.5 | 1.3 | Not have | Not have | Not have |
| Exam 2 | 17.8 | 80 | 3.8 | -1.8 | -0.7 | 1.1 | Not have | Not have | Not have |
| Exam 3 | 18.0 | 100 | 3.8 | -1.9 | -0.6 | 1.3 | Not have | Not have | Not have |
| Exam 4 | 18.1 | 140 | 38.2 | -1.8 | -0.5 | 1.3 | Not have | Not have | Not have |
| Exam 5 | 17.9 | 73 | 66.7 | 5.1 | 10.8 | 5.7 | Not have | Not have | Not have |
| Exam 6 | 18.0 | 85 | 72.1 | 5.3 | 13.0 | 7.7 | Not have | Not have | Not have |
| Exam 7 | 18.2 | 100 | 3.4 | 1.4 | 6.6 | 5.2 | Not have | Not have | Not have |
| Exam 8 | 18.0 | 170 | 15.0 | -1.8 | -0.6 | 1.2 | Not have | Not have | Not have |
| Exam 9 | 18.0 | 160 | 7.2 | -1.7 | -0.7 | 1.0 | Not have | Not have | Not have |
| Exam 10 | 17.8 | 100 | 3.5 | -1.8 | -0.6 | 1.2 | Not have | Not have | Not have |
| Exam 11 | 17.9 | 180 | 16.8 | -1.9 | -0.5 | 1.4 | Not have | Not have | Not have |
| Exam 12 | 18.1 | 165 | 6.1 | -1.8 | -0.6 | 1.2 | Not have | Not have | Not have |
| Exam 13 | 18.0 | 90 | 3.1 | -1.8 | -0.5 | 1.3 | Not have | Not have | Not have |
| Exam 14 | 17.8 | 120 | 3.6 | -1.8 | -0.6 | 1.2 | Not have | Not have | Not have |
| Exam 15 | 17.8 | 100 | 3.5 | -1.8 | -0.7 | 1.1 | Have | Not have | Not have |
| Exam 16 | 17.9 | 90 | 3.2 | -1.8 | -0.6 | 1.2 | Have | Not have | Not have |
| Exam 17 | 17.9 | 80 | 3.4 | -1.8 | -0.8 | 1.0 | Have | Not have | Not have |
| Exam 18 | 18.0 | 50 | 3.6 | -1.8 | -0.7 | 1.1 | Have | Have | Not have |
| Exam 19 | 17.8 | 110 | 3.5 | -1.8 | -0.7 | 1.1 | Have | Not have | Not have |
| Exam 20 | 17.8 | 115 | 3.3 | -1.8 | -0.8 | 1.0 | Have | Not have | Not have |
| Exam 21 | 18.0 | 120 | 3.5 | -1.8 | -0.6 | 1.2 | Have | Not have | Not have |
| Exam 22 | 17.9 | 110 | 3.2 | -1.8 | -0.6 | 1.2 | Have | Not have | Not have |
| Exam 23 | 17.9 | 90 | 3.4 | -1.8 | -0.7 | 1.1 | Have | Not have | Not have |
| Exam 24 | 18.0 | 120 | 3.5 | -1.8 | -0.6 | 1.2 | Have | Not have | Not have |
| Exam 25 | 18.1 | 120 | 3.2 | -1.8 | -0.7 | 1.1 | Have | Have | Not have |
| Exam 26 | 18.0 | 120 | 3.3 | -1.8 | -0.7 | 1.1 | Have | Not have | Not have |

**[Table 5-2]**

| | Evaluated item | | | | | | | | |
|---|---|---|---|---|---|---|---|---|---|
| | Film thickness (µm) | T35(s) | ΔH(%) | Initial YI | YI after heat resisting (100°C, 500 hr) | YI variation (ΔYI) | Moisture resistance | Boil (100°C, 2 hr) | Acid resistance |
| Exam 27 | 18.2 | 140 | 16.8 | -1.8 | -0.7 | 1.1 | Have | Not have | Not have |
| Exam 28 | 18.0 | 100 | 3.5 | -1.8 | -0.6 | 1.2 | Have | Have | Have |
| Exam 29 | 18.0 | 80 | 3.0 | -1.8 | -0.6 | 1.2 | Have | Have | Have |
| Exam 30 | 18.0 | 62 | 2.8 | -1.8 | -0.7 | 1.1 | Have | Have | Have |
| Exam 31 | 12.0 | 80 | 3.5 | -1.8 | -0.8 | 1.0 | Have | Have | Have |
| Exam 32 | 25.0 | 150 | 3.5 | -1.8 | -0.3 | 1.5 | Have | Have | Have |
| Exam 33 | 18.0 | 100 | 3.5 | 7.5 | 8.0 | 0.5 | Have | Have | Have |
| Exam 34 | 18.0 | 120 | 3.5 | 7.5 | 8.2 | 0.7 | Have | Not have | Not have |

It is seen from the examples 1 to 3 that the water-soluble epoxy is not limited to a specific material and can be appropriately changed for use. Further, in the examples 4 to 6 using the chelate compound solutions of other than aluminum, abrasion resistance was not good.

In the examples 8, 9, 11, an amount of the aluminum or the alkoxysilane compound was changed. The abrasion resistance of these was not good either, from which it is seen that adjusting an amount of each composition makes it possible to obtain a film having a more appropriate property.

The examples 14 to 20 use the water-soluble epoxy and the water-insoluble epoxy in the antifogging film, and it is seen that adding the water-insoluble epoxy to the water-soluble epoxy tends to improve moisture resistance of the antifogging layer. On the other hand, too large an amount of the water-insoluble epoxy as in the example 18 deteriorates antifogging performance, and therefore its amount is preferably appropriately adjusted. Further, it is seen from the example 19 and the example 20 that the water-insoluble epoxy is not limited to a specific material, and can be appropriately changed for use.

It is seen from the examples 21 to 23 that the alkoxysilane compound is not limited to a specific material either, and can be appropriately changed for use.

The examples 24 to 30 each have the foundation layer in addition to the antifogging layer. It is seen that the presence of the foundation layer or the SiO₂ filler tends to improve boil test performance and acid resistance. In the use as automobile glass, various kinds of resistances are required, and therefore the foundation layer is provided.

It is seen from the examples 31 and 32 that the present invention can be embodied with a changed film thickness. Further, it is seen from the examples 33 and 34 that the present invention can be embodied with changed kinds of the base.

### Explanation of Numerals

- 1: transparent base
- 2: antifogging layer
- 3: foundation layer
- 4: curved glass plate
- 5: intermediate film

## Claims

1. An antifogging article comprising:
a transparent base;
an antifogging layer made of an epoxy resin cured material provided on the transparent base, the epoxy resin cured material containing a silicon atom and an aluminum atom; and
a foundation layer between the transparent base and the antifogging layer, the foundation layer being made of an epoxy resin cured material having a structure in which a silicon atom and three electron-withdrawing groups are bonded, wherein the antifogging agent composition from which the antifogging layer is formed by curing contains at least one kind of water-soluble epoxy resin, at least one kind of aluminum compound having at least one of an aluminum alkoxide structure and an aluminum chelate structure, and at least one kind of alkoxysilane compound, the antifogging layer being a layer whose main skeletal structure is a water-soluble epoxy resin,
wherein the water-soluble epoxy resin is a combination of a first resin with a 90% water-soluble rate or more and a second resin with a 50% water-soluble rate or less, the water-soluble rate referring to a dissolution rate when a 10 part by mass resin is mixed to 90 part by mass water at 25°C,
wherein the content of the resin component in the antifogging agent composition is from 50 to 95% by mass in terms of the solid content, and the content of the aluminum compound is from 0.1 to 20 parts by mass and the content of the alkoxysilane compound is from 5 to 40 parts by mass, relative to 100 parts by mass of the epoxy resin component, respectively, and
wherein the antifogging layer has physical properties of:
an antifogging time (T₃₅) of eighty seconds or more in a 35°C steam test, wherein the 35°C steam test is performed by measuring the antifogging time (T₃₅) from an installation of the transparent base with the antifogging layer on one main surface of the transparent base in a hermetic state while a square region in an area with 70 mm × 70 mm of a surface of the antifogging layer at a distance of 85 mm from a hot water surface of a 35°C hot water bath, until when haze or distortion on the square region by a water film is visually recognized, after the transparent base with the antifogging layer is left under an environment at 23°C and 50% RH for one hour;
a variation ΔH of 4.0% or less in haze after a Taber abrasion test stipulated in Japan Industrial Standard (JIS) R3212; and
a variation ΔYI of 3 or less in a yellowness index stipulated in JIS K7373 after the antifogging layer is kept at 100°C for 500 hours.

2. The antifogging article according to claim 1, wherein the antifogging layer undergoes no peeling after being held in a 50°C and 95% relative humidity thermohygrostat for 2000 hours.

3. The antifogging article according to claim 2, wherein the composing material of the antifogging layer is an epoxy resin cured material further containing an aromatic ring.

4. The antifogging article according to claim 1, wherein the antifogging layer undergoes no peeling after a boil test stipulated in JIS R3212.

5. The antifogging article according to claim 1, wherein the antifogging layer undergoes no peeling after immersed in a 21 to 25°C, 0.1 N nitric acid aqueous solution for three hours.

6. The antifogging article according to claim 1, wherein the antifogging layer contains a filler, the content of the filler being from 1 to 20 parts by mass, relative to 100 parts by mass of the epoxy resin component.

7. The antifogging article according to claim 6, wherein the filler is a silica filler.

8. An automobile glass comprising:
a curved laminated glass;
a foundation layer provided on a concave surface of the curved laminated glass, the foundation layer being made of an epoxy resin cured material having a structure in which a silicon atom and three electron-withdrawing groups are bonded; and
an antifogging layer made of an epoxy resin cured material provided on the foundation layer, the epoxy resin cured material containing a silicon atom and an aluminum atom,
wherein the antifogging agent composition from which the antifogging layer is formed by curing contains at least one kind of water-soluble epoxy resin, at least one kind of aluminum compound having at least one of an aluminum alkoxide structure and an aluminum chelate structure, and at least one kind of alkoxysilane compound, the antifogging layer being a layer whose main skeletal structure is a water-soluble epoxy resin,
wherein the water-soluble epoxy resin is a combination of a first resin with a 90% water-soluble rate or more and a second resin with a 50% water-soluble rate or less, the water-soluble rate referring to a dissolution rate when a 10 part by mass resin is mixed to 90 part by mass water at 25°C,
wherein the content of the resin component in the antifogging agent composition is from 50 to 95% by mass in terms of the solid content, and the content of the aluminum compound is from 0.1 to 20 parts by mass and the content of the alkoxysilane compound is from 5 to 40 parts by mass, relative to 100 parts by mass of the epoxy resin component, respectively, and
wherein the antifogging layer has physical properties of:
an antifogging time (T₃₅) of eighty seconds or more in a 35°C steam test, wherein the 35°C steam test is performed by measuring the antifogging time (T₃₅) from an installation of the transparent base with the antifogging layer on one main surface of the transparent base in a hermetic state while a square region in an area with 70 mm × 70 mm of a surface of the antifogging layer at a distance of 85 mm from a hot water surface of a 35°C hot water bath, until when haze or distortion on the square region by a water film is visually recognized, after the transparent base with the antifogging layer is left under an environment at 23°C and 50% RH for one hour;
a variation ΔH of 4.0% or less in haze after a Taber abrasion test stipulated in Japan Industrial Standard (JIS) R3212;
a variation ΔYI of 3 or less in a yellowness index stipulated in JIS K7373 after the antifogging layer is kept at 100°C for 500 hours; and
a yellowness index YI₂ of 3 or less stipulated in JIS K7373 after the antifogging layer is kept at 100°C for 500 hours.

## Patentansprüche

1. Antibeschlagsgegenstand, umfassend:
eine transparente Basis,
eine Antibeschlagsschicht, hergestellt aus einem Epoxyharz-gehärteten Material, angeordnet auf der transparenten Basis, wobei das Epoxyharz-gehärtete Material ein Siliciumatom und ein Aluminiumatom enthält, und
eine Grundschicht zwischen der transparenten Basis und der Antibeschlagsschicht, wobei die Grundschicht aus einem Epoxyharz-gehärteten Material mit einer Struktur hergestellt ist, worin ein Siliciumatom und drei Elektronen-ziehende Gruppen gebunden sind,
wobei die Antibeschlagsmittelzusammensetzung, aus welcher die Antibeschlagsschicht durch Härten gebildet wird, mindestens eine Art von wasserlöslichem Epoxyharz, mindestens eine Art von Aluminiumverbindung mit mindestens einem von einer Aluminiumalkoxidstruktur und einer Aluminiumchelatstruktur und mindestens eine Art von Alkoxysilanverbindung enthält, wobei die Antibeschlagsschicht eine Schicht ist, deren Hauptgerüststruktur ein wasserlösliches Epoxyharz ist,
wobei das wasserlösliche Epoxyharz eine Kombination eines ersten Harzes mit einer 90% Wasserlöslichkeitsrate oder mehr und eines zweiten Harzes mit einer 50% Wasserlöslichkeitsrate oder weniger ist, wobei die Wasserlöslichkeitsrate sich auf eine Auflösungsrate bezieht, wenn 10 Masseteile Harz zu 90 Masseteilen Wasser bei 25 °C gemischt werden,
wobei der Anteil der Harzkomponente in der Antibeschlagsmittelzusammensetzung von 50 bis 95 Masse-%, bezogen auf den Feststoffanteil, beträgt, und der Anteil der Aluminiumverbindung von 0,1 bis 20 Masseteile beträgt und der Anteil der Alkoxysilanverbindung von 5 bis 40 Masseteile, relativ zu 100 Massenteilen der Epoxyharzkomponente, beträgt, und
wobei die Antibeschlagsschicht physikalische Eigenschaften aufweist:
eine Antibeschlagszeit (T₃₅) von achtzig Sekunden oder mehr in einem 35°C Dampftest, wobei der 35°C Dampftest durchgeführt wird durch Messen der Antibeschlagszeit (T₃₅) von einer Installation der transparenten Basis mit der Antibeschlagsschicht auf einer Hauptoberfläche der transparenten Basis in einem hermetischen Zustand, während ein Quadratbereich in einer Fläche mit 70 mm x 70 mm einer Oberfläche der Antibeschlagsschicht bei einem Abstand von 85 mm von einer Heißwasseroberfläche eines 35°C Heißwasserbads ist, bis Trübung oder Verzerrung auf dem rechteckigen Bereich durch einen Wasserfilm visuell erkannt wird, nachdem die transparente Basis mit der Antibeschlagsschicht unter einer Umgebung bei 23°C und 50% relativer Feuchtigkeit für eine Stunde gelassen worden ist,
eine Variation ΔH von 4,0% oder weniger in Trübung nach einem Taber-Abrasionstest, vorgegeben im japanischen Industriestandard (JIS) R3212, und eine Variation ΔYI von 3 oder weniger in einem Gelbindex, vorgegeben in JIS K7373, nachdem die Antibeschlagsschicht bei 100°C für 500 Stunden gehalten worden ist.

2. Antibeschlagsgegenstand gemäß Anspruch 1, wobei die Antibeschlagsschicht kein Abschälen eingeht, nach Halten in einem Thermohygrostat bei 50°C und 95% relativer Feuchtigkeit für 2000 Stunden.

3. Antibeschlagsgegenstand gemäß Anspruch 2, wobei das zusammensetzende Material der Antibeschlagsschicht ein Epoxyharz-gehärtetes Material ist, weiter enthaltend einen aromatischen Ring.

4. Antibeschlagsgegenstand gemäß Anspruch 1, wobei die Antibeschlagsschicht kein Abschälen nach einem Kochtest gemäß JIS R 3212 eingeht.

5. Antibeschlagsgegenstand gemäß Anspruch 1, wobei die Antibeschlagsschicht kein Abschälen nach Eintauchen in eine 21 bis 25°C, 0,1 N Salpetersäurewässrige Lösung für drei Stunden eingeht.

6. Antibeschlagsschicht gemäß Anspruch 1, wobei die Antibeschlagsschicht einen Füllstoff enthält, wobei der Anteil des Füllstoffs von 1 bis 20 Masseteilen, relativ zu 100 Masseteilen der Epoxyharzkomponente, ist.

7. Antibeschlagsgegenstand gemäß Anspruch 6, wobei der Füllstoff ein Silicafüllstoff ist.

8. Automobilglas, umfassend:
ein gebogenes laminiertes Glas
eine Grundschicht, angeordnet auf einer konkaven Oberfläche des gebogenen laminierten Glases, wobei die Grundschicht aus einem Epoxyharz-gehärteten Material mit einer Struktur, worin ein Siliciumatom und drei Elektronen-ziehende Gruppen gebunden sind, hergestellt ist, und
eine Antibeschlagsschicht, hergestellt aus einem Epoxyharz-gehärteten Material, angeordnet auf der Grundschicht, wobei das Epoxyharz-gehärtete Material ein Siliciumatom und ein Aluminiumatom enthält,
wobei die Antibeschlagsmittelzusammensetzung, aus welcher die Antibeschlagsschicht durch Härten gebildet wird, mindestens eine Art von wasserlöslichem Epoxyharz, mindestens eine Art von Aluminiumverbindung mit mindestens einem von einer Aluminiumalkoxidstruktur und einer Aluminiumchelatstruktur und mindestens eine Art von Alkoxysilanverbindung enthält, wobei die Antibeschlagsschicht eine Schicht ist, deren Hauptgerüststruktur ein wasserlösliches Epoxyharz ist,
wobei das wasserlösliche Epoxyharz eine Kombination eines ersten Harzes mit einer 90% Wasserlöslichkeitsrate oder mehr und eines zweiten Harzes mit einer 50% Wasserlöslichkeitsrate oder weniger ist, wobei die Wasserlöslichkeitsrate sich auf eine Auflösungsrate bezieht, wenn 10 Masseteile Harz zu 90 Masseteilen Wasser bei 25°C gemischt werden,
wobei der Anteil der Harzkomponente in der Antibeschlagsmittelzusammensetzung von 50 bis 95 Masse-%, bezogen auf den Feststoffanteil, beträgt, und der Anteil der Aluminiumverbindung von 0,1 bis 20 Masseteile beträgt und der Anteil der Alkoxysilanverbindung von 5 bis 40 Masseteile, relativ zu 100 Massenteilen der Epoxyharzkomponente, beträgt, und
wobei die Antibeschlagsschicht physikalische Eigenschaften aufweist:
eine Antibeschlagszeit (T₃₅) von achtzig Sekunden oder mehr in einem 35°C Dampftest, wobei der 35°C Dampftest durchgeführt wird durch Messen der Antibeschlagszeit (T₃₅) von einer Installation der transparenten Basis mit der Antibeschlagsschicht auf einer Hauptoberfläche der transparenten Basis in einem hermetischen Zustand, während ein Quadratbereich in einer Fläche mit 70 mm x 70 mm einer Oberfläche der Antibeschlagsschicht bei einem Abstand von 85 mm von einer Heißwasseroberfläche eines 35°C Heißwasserbads ist, bis Trübung oder Verzerrung auf dem rechteckigen Bereich durch einen Wasserfilm visuell erkannt wird, nachdem die transparente Basis mit der Antibeschlagsschicht unter einer Umgebung bei 23°C und 50% relativer Feuchtigkeit für eine Stunde gelassen worden ist,
eine Variation ΔH von 4,0% oder weniger in Trübung nach einem Taber-Abrasionstest, vorgegeben im japanischen Industriestandard (JIS) R3212,
eine Variation ΔYI von 3 oder weniger in einem Gelbindex, vorgegeben in JIS K7373, nachdem die Antibeschlagsschicht bei 100°C für 500 Stunden gehalten worden ist; und
einen Gelbindex YI₂ von 3 oder weniger, vorgegeben in JIS K7373, nachdem die Antibeschlagsschicht bei 100°C für 500 Stunden gehalten worden ist.

## Revendications

1. Article antibuée comprenant :
une base transparente ;
une couche antibuée faite d'un matériau durci de résine époxy, disposée sur la base transparente, le matériau durci de résine époxy contenant un atome de silicium et un atome d'aluminium ; et
une couche d'assise entre la base transparente et la couche antibuée, la couche d'assise étant faite d'un matériau durci de résine époxy ayant une structure dans laquelle un atome de silicium et trois groupes extracteurs d'électrons sont liés,
dans lequel la composition d'agent antibuée à partir de laquelle la couche antibuée est formée par durcissement contient au moins un type de résine époxy soluble dans l'eau, au moins un type de composé de l'aluminium ayant au moins l'une parmi une structure d'alkylate d'aluminium et une structure de chélate d'aluminium, et au moins un type de composé alcoxysilane, la couche antibuée étant une couche dont la structure de charpente principale est une résine époxy soluble dans l'eau,
dans lequel la résine époxy soluble dans l'eau est une combinaison d'une première résine ayant un taux de solubilité dans l'eau de 90 % ou plus et d'une deuxième résine ayant un taux de solubilité dans l'eau de 50 % ou moins, le taux de solubilité dans l'eau se référant au taux de dissolution quand 10 parties en masse de résine sont mélangées avec 90 parties en masse d'eau à 25°C,
dans lequel la teneur en le composant résine dans la composition d'agent antibuée est de 50 à 95 % en masse en termes de la teneur en solides, et la teneur en le composé de l'aluminium est de 0,1 à 20 parties en masse et la teneur en le composé alcoxysilane est de 5 à 40 parties en masse par rapport à 100 parties en masse du composant résine époxy, respectivement, et
dans lequel la couche antibuée a les propriétés physiques suivantes :
un temps antibuée (T₃₅) de quatre-vingt secondes ou plus dans un test de vapeur à 35°C, dans lequel le test de vapeur à 35°C est effectué par mesure du temps antibuée (T₃₅) à partir d'une installation de la base transparente avec la couche antivoile sur une surface principale de la base transparente dans un état hermétique, avec une région carrée constituant une zone de 70 mm x 70 mm d'une surface de la couche antibuée à une distance de 85 mm par rapport à la surface d'eau chaude d'un bain d'eau chaude à 35°C, jusqu'à ce qu'un voile ou une distorsion sur la région carrée par un film d'eau soit reconnu visuellement, après quoi la base transparente avec la couche antibuée est laissée dans un environnement à 23°C et sous 50 % HR pendant une heure ;
une variation ΔH de 4,0 % ou moins du voile après un test d'abrasion Taber stipulé dans la norme industrielle japonaise (JIS) R3212 ; et
une variation ΔYI de 3 ou moins de l'indice de jaunissement stipulé dans la norme JIS K7373 après que la couche antibuée a été maintenue à 100°C pendant 500 heures.

2. Article antibuée selon la revendication 1, dans lequel la couche antibuée ne subit pas de pelage après avoir été maintenue dans un thermo-hygrostat à 50°C et sous une humidité relative de 95 % pendant 2000 heures.

3. Article antibuée selon la revendication 2, dans lequel le matériau constitutif de la couche antibuée est un matériau durci de résine époxy contenant en outre un cycle aromatique.

4. Article antibuée selon la revendication 1, dans lequel la couche antibuée ne subit pas de pelage après un test d'ébullition stimulé dans la norme JIS R3212.

5. Article antibuée selon la revendication 1, dans lequel la couche antibuée ne subit pas de pelage après avoir été immergée dans une solution aqueuse d'acide nitrique 0,1 N à une température de 21 à 25°C pendant trois heures.

6. Article antibuée selon la revendication 1, dans lequel la couche antibuée contient une charge, la teneur en la charge étant de 1 à 20 parties en masse par rapport à 100 parties en masse du composant résine époxy.

7. Article antibuée selon la revendication 6, dans lequel la charge est une charge de silice.

8. Vitre d'automobile comprenant :
un verre feuilleté incurvé ;
une couche d'assise disposée sur une surface concave du verre feuilleté incurvé, la couche d'assise étant faite d'un matériau durci de résine époxy ayant une structure dans laquelle un atome de silicium et trois groupes extracteurs d'électrons sont liés ; et
une couche antibuée faite d'un matériau durci de résine époxy, disposée sur la couche d'assise, le matériau durci de résine époxy contenant un atome de silicium et un atome d'aluminium,
dans laquelle la composition d'agent antibuée à partir de laquelle la couche antibuée est formée par durcissement contient au moins un type de résine époxy soluble dans l'eau, au moins un type de composé de l'aluminium ayant au moins l'une parmi une structure d'alkylate d'aluminium et une structure de chélate d'aluminium, et au moins un type de composé alcoxysilane, la couche antibuée étant une couche dont la structure de charpente principale est une résine époxy soluble dans l'eau,
dans laquelle la résine époxy soluble dans l'eau est une combinaison d'une première résine ayant un taux de solubilité dans l'eau de 90 % ou plus et d'une deuxième résine ayant un taux de solubilité dans l'eau de 50 % ou moins, le taux de solubilité dans l'eau se référant au taux de dissolution quand 10 parties en masse de résine sont mélangées avec 90 parties en masse d'eau à 25°C,
dans laquelle la teneur en le composant résine dans la composition d'agent antibuée est de 50 à 95 % en masse en termes de la teneur en solides, et la teneur en le composé de l'aluminium est de 0,1 à 20 parties en masse et la teneur en le composé alcoxysilane est de 5 à 40 parties en masse par rapport à 100 parties en masse du composant résine époxy, respectivement, et
dans laquelle la couche antibuée a les propriétés physiques suivantes :
un temps antibuée (T₃₅) de quatre-vingt secondes ou plus dans un test de vapeur à 35°C, dans lequel le test de vapeur à 35°C est effectué par mesure du temps antibuée (T₃₅) à partir d'une installation de la base transparente avec la couche antivoile sur une surface principale de la base transparente dans un état hermétique, avec une région carrée constituant une zone de 70 mm x 70 mm d'une surface de la couche antibuée à une distance de 85 mm par rapport à la surface d'eau chaude d'un bain d'eau chaude à 35°C, jusqu'à ce qu'un voile ou une distorsion sur la région carrée par un film d'eau soit reconnu visuellement, après quoi la base transparente avec la couche antibuée est laissée dans un environnement à 23°C et sous 50 % HR pendant une heure ;
une variation ΔH de 4,0 % ou moins du voile après un test d'abrasion Taber stipulé dans la norme industrielle japonaise (JIS) R3212 ; et
une variation ΔYI de 3 ou moins de l'indice de jaunissement stipulé dans la norme JIS K7373 après que la couche antibuée a été maintenue à 100°C pendant 500 heures ; et
un indice de jaunissement ΔYI₂ de 3 ou moins stipulé dans la norme JIS K7373 après que la couche antibuée a été maintenue à 100°C pendant 500 heures.
